# EUROPEAN PATENT APPLICATION

(11) **EP 4 617 336 A1**
(43) Date of publication of application: **17.09.2025**
(21) Application number: 24305383.2
(22) Date of filing: 14.03.2024
(51) Int. Cl.: C09J 4/06, C09J 133/06, C09J 133/24

(54) **TWO-COMPONENT COMPOSITION**

(71) Applicant: Bostik SA, 92800 Puteaux (FR)
(72) Inventor: VAIQUE, Emilie, 33114 Le Barp (FR); INOUBLI, Rabi, 69491 Pierre-Benite Cedex (FR)
(74) Representative: Arkema Patent

(57) **Abstract**

The invention relates to a two-component composition comprising:
- a component A comprising:
∘ a monofunctional (meth)acrylate monomer,
∘ an acrylic block copolymer, and
∘ a functionalized core-shell filler, and

- a component B comprising:
∘ a radical initiator.

The invention also relates to the use of the composition according to the invention as an adhesive.

Furthermore, the invention relates to a method for bonding substrates comprising the steps of:
- coating, on at least one surface of the substrates, of the composition according to the invention, then
- contacting the substrates, then
- crosslinking the composition.

Finally, the invention relates to an article comprising the composition according to the invention, said composition bonding at least two substrates of said article.

## Description

### TECHNICAL FIELD

The present invention relates to a two-component composition and its use, a method for bonding substrates and an article.

### TECHNICAL BACKGROUND

Acrylic compositions are known reactive systems which crosslink by radical polymerization. Most acrylic systems are two-component systems. The first component conventionally contains the reactive monomers, and the second component contains the radical initiator.

Some acrylic compositions are used as structural adhesives, which could be defined as adhesive having high adhesion strength, in particular lap shear strength. Structural adhesives can withstand high loads but could be damaged under mechanical stress.

Mechanical stress resistance can be evaluated by measuring the Young modulus (the higher the Young modulus, the higher the mechanical stress resistance). However, increasing the Young modulus generally results in a decrease of elongation at break. If the elongation at break is too low, the adhesive bond may be broken when subjected to changes of temperature, particularly when the bonded substrates have different coefficients of expansion.

Therefore, the present invention aims at providing a two-component acrylic composition having an increased Young modulus, while not sacrificing its elongation at break and maintaining a high lap shear strength, in particular on metal substrates.

### SUMMARY OF THE INVENTION

The invention relates to a two-component composition comprising:
- a component A comprising:
   ∘ a monofunctional (meth)acrylate monomer,
   ∘ an acrylic block copolymer, and
   ∘ a functionalized core-shell filler, and
- a component B comprising:
   ∘ a radical initiator.

The invention also relates to the use of the composition according to the invention as an adhesive.

Furthermore, the invention relates to a method for bonding substrates comprising the steps of:
- coating, on at least one surface of the substrates, of the composition according to the invention, then
- contacting the substrates, then
- crosslinking the composition.

Finally, the invention relates to an article comprising the composition according to the invention, said composition bonding at least two substrates of said article.

The present invention makes it possible to address the need mentioned above. In particular, the composition according to the invention surprisingly has an increased Young modulus, while maintaining a high lap shear strength and a high elongation at break (see Examples below). In particular, the composition according to the invention has a Young modulus comprised between 800 MPa and 1200 MPa, a lap shear strength on metal comprised between 10 MPa and 40 MPa and an elongation at break comprised between 60 % and 100 %.

### DESCRIPTION OF THE INVENTION

### Composition

The composition according to the invention is a "two-component" composition, i.e. a composition separated into two parts to prevent it from polymerizing on its own. A first part, in this case component A, comprises at least one polymerizable compound (such as a monofunctional (meth)acrylate monomer), while a second part, in this case component B, comprises the radical initiator of the polymerization reaction. The initiation of the polymerization reaction can therefore only occur when the component A is brought into contact with the component B comprising the radical initiator.

### Monofunctional alkyl (meth)acrylate monomer

The component A comprises a monofunctional (meth)acrylate monomer, i.e. a monomer comprising only one (meth)acrylate group.

As used herein, the word "a" or "an" means one or more.

As used herein, the term "(meth)acrylate" means methacrylate or acrylate.

Advantageously, the monofunctional (meth)acrylate monomer has the formula (I): CH₂=C(R^{a})-COOR^{b}, wherein:
- R^{a} represents a hydrogen atom or a methyl group, preferably a methyl group,
- R^{b} represents an aliphatic or aromatic hydrocarbon group optionally comprising one or more groups selected from ether, ester, hydroxyl, carbonyl, and mixtures thereof, preferably R^{b} represents an aliphatic or aromatic hydrocarbon group (not comprising any heteroatom), more preferably an alkyl group.

As used herein, the term "alkyl" means aliphatic acyclic or cyclic hydrocarbon group (cyclic meaning comprising an aliphatic cycle), not comprising any carbon-carbon double bond.

When R^{b} represents an alkyl group, the monofunctional alkyl (meth)acrylate monomer may be selected from C1-C22 alkyl (meth)acrylates, preferably C1-C12 alkyl (meth)acrylates.

As used herein, the term "CX-CY alkyl (meth)acrylate" means an alkyl ester of (meth)acrylic acid wherein the alkyl bears from X to Y carbon atoms.

As used herein, the term "(meth)acrylic acid" means methacrylic acid or acrylic acid.

For example, the monofunctional (meth)acrylate monomer may be selected from methyl (meth)acrylate, ethyl (meth)acrylate, n-propyl (meth)acrylate, iso-propyl (meth)acrylate, n-butyl (meth)acrylate, iso-butyl (meth)acrylate, cyclohexyl (meth)acrylate, 2-ethylhexyl (meth)acrylate, 2-octyl (meth)acrylate, isooctyl (meth)acrylate, n-octyl (meth)acrylate, isobornyl (meth)acrylate, glycerol formal (meth)acrylate, 3,3,5-trimethylcyclohexyl (meth)acrylate, tert-butylcyclohexyl (meth)acrylate, (octahydro-4,7-methano-1H-indenyl)methyl (meth)acrylate (CAS 127823-21-6), and mixtures thereof, preferably from methyl methacrylate, isobornyl acrylate, isobornyl methacrylate, glycerol formal methacrylate, 3,3,5-trimethylcyclohexyl (meth)acrylate, tert-butylcyclohexyl (meth)acrylate, (octahydro-4,7-methano-1H-indenyl)methyl (meth)acrylate, and mixtures thereof, in particular methyl methacrylate.

Advantageously, the monofunctional (meth)acrylate monomer comprises at least 50 % by weight of methyl methacrylate with respect to the total weight of the monofunctional (meth)acrylate monomer, preferably at least 75 % by weight of methyl methacrylate, more preferably at least 90 % by weight of methyl methacrylate.

The monofunctional (meth)acrylate monomer content may be comprised between 20 % and 80 % by weight with respect to the total weight of component A, preferably between 30 % and 70% by weight, more preferably between 40 % and 60 % by weight.

In the context of the invention, the ranges of values are understood to be inclusive. For example, the range "between 0% and 25%" includes, in particular, the values 0% and 25%.

### Acrylic block copolymer

The component A comprises an acrylic block copolymer.

By "acrylic block copolymer", it is intended a block copolymer comprising at least one acrylic block, i.e. comprising at least one block consisting of a polymer obtained from at least one acrylic monomer. By "acrylic monomer", it is intended in particular a monomer comprising a group of formula -X-(C=O)-C(R)=CH₂, wherein R represents a hydrogen atom or a methyl radical, and -X- represents -O- or -NR'- with R' representing a hydrogen atom or an alkyl radical (cyclic, linear or branched) comprising from 1 to 22 carbon atoms, preferably from 1 to 14, more preferably from 1 to 8 carbon atoms. Preferably, -X- represents -O-.

By "block copolymer", it is intended a copolymer comprising polymer blocks, i.e. polymer sequences being chemically different from each other and being linked together by a covalent bond.

Advantageously, the acrylic block copolymer is not obtained from styrene, preferably the acrylic block copolymer only comprises (meth)acrylic blocks (i.e. all its blocks are obtained from (meth)acrylic monomer(s)), more preferably only alkyl (meth)acrylate blocks, each block optionally further comprising one or more monomers selected from (meth)acrylic acid, amides of (meth)acrylic acid (preferably dialkyl(meth)acrylamides such as N,N-dimethylacrylamide), amino (meth)acrylates (preferably (meth)acrylates comprising a primary amine, such as 2-aminoethyl (meth)acrylate), epoxy (meth)acrylates (such as glycidyl (meth)acrylate), hydroxy (meth)acrylates (such as polyethylene glycol (meth)acrylate), alkoxy (meth)acrylates (such as 2-methoxyethyl (meth)acrylate), and mixtures thereof, preferably (meth)acrylic acid, in particular acrylic acid (i.e. each block may be obtained from alkyl (meth)acrylate monomer(s) and optionally one or more of the above-cited monomers).

Advantageously, the acrylic block copolymer comprises at least one block A and at least one block B, the block A being a polymer (preferably a homopolymer) comprising methyl methacrylate monomer (i.e. methyl methacrylate is the sole monomer or one of the monomers implemented to obtain the polymer), and the block B being a polymer (preferably a copolymer) not comprising methyl methacrylate monomer. Preferably, the acrylic block copolymer is a diblock copolymer A-B or a triblock copolymer A-B-A (the two blocks A being obtained from identical or different monomers, preferably identical monomers), more preferably a triblock copolymer A-B-A.

Preferably, at least one block (preferably block B) of the acrylic block copolymer is a polymer obtained from a monomer mixture comprising between 0.1 % and 15 % by weight, preferably between 1 % and 10 % by weight, more preferably between 2 % and 7 % by weight, with respect to the total weight of the monomer mixture, of one or more monomers selected from (meth)acrylic acid, amides of (meth)acrylic acid (preferably dialkyl(meth)acrylamides such as N,N-dimethylacrylamide), amino (meth)acrylates (preferably (meth)acrylates comprising a primary amine, such as 2-aminoethyl (meth)acrylate), epoxy (meth)acrylates (such as glycidyl (meth)acrylate), hydroxy (meth)acrylates (such as polyethylene glycol (meth)acrylate), alkoxy (meth)acrylates (such as 2-methoxyethyl (meth)acrylate), and mixtures thereof, preferably (meth)acrylic acid, in particular acrylic acid.

Preferably, the block A is a polymer obtained from a monomer mixture comprising at least 50 % by weight of methyl methacrylate with respect to the total weight of the monomer mixture, more preferably at least 75 % by weight, even more preferably is a homopolymer of methyl methacrylate.

It is understood that "monomer mixture" refers to a mixture consisting of one or more monomers; therefore, when calculating the total weight of the monomer mixture, ingredients other than monomers (implemented during polymerization such as solvents, surfactants, ...) are not taken into account.

When the block A is a copolymer of methyl methacrylate, the other monomer(s) constituting said copolymer may be selected from methyl acrylate, ethyl (meth)acrylate, (meth)acrylic acid, propyl (meth)acrylate, n-butyl (meth)acrylate, isobutyl (meth)acrylate, pentyl (meth)acrylate, hexyl (meth)acrylate, cyclohexyl (meth)acrylate, isobornyl (meth)acrylate, amides of (meth)acrylic acid (preferably dialkyl(meth)acrylamides such as N,N-dimethylacrylamide), 2-methoxy ethyl(meth)acrylate, 2-aminoethyl(meth)acrylate, glycidyl (meth)acrylate, polyethylene glycol (meth)acrylate (PEG (meth)acrylate) wherein the PEG group has a molar mass ranging from 400 to 10000 g/mol, and mixtures thereof, preferably (meth)acrylic acid.

Preferably, the block B is a polymer having a glass transition temperature (Tg) less than 0°C, more preferably less than -20°C. The Tg may be measured using differential scanning calorimetry (DSC).

The block B may be a polymer obtained from a monomer mixture comprising at least 50 % by weight of one or more monomers selected from ethyl acrylate, n-butyl acrylate, 2-ethylhexyl acrylate, hydroxyethyl acrylate, 2-ethylhexyl methacrylate, and mixtures thereof with respect to the total weight of the monomer mixture, preferably at least 50 % by weight of n-butyl acrylate, more preferably at least 75 % by weight of n-butyl acrylate.

Advantageously, the block B is a copolymer obtained from a monomer mixture comprising at least 50 % by weight of n-butyl acrylate and between 0.1 % and 15 % by weight of (meth)acrylic acid, with respect to the total weight of the monomer mixture, preferably at least 75 % by weight of n-butyl acrylate and between 1 % and 10 % by weight of (meth)acrylic acid, more preferably at least 75 % by weight of n-butyl acrylate and between 2 % and 7 % by weight of (meth)acrylic acid, in particular acrylic acid.

According to an embodiment, the acrylic block copolymer is a diblock copolymer A-B or a triblock copolymer A-B-A, preferably a triblock copolymer A-B-A, wherein:
- the block A is a polymer obtained from a monomer mixture comprising at least 75 % by weight of methyl methacrylate with respect to the total weight of the monomer mixture, preferably is a homopolymer of methyl methacrylate, and
- the block B is a polymer obtained from a monomer mixture comprising at least 75 % by weight of n-butyl acrylate with respect to the total weight of the monomer mixture, the monomer mixture preferably comprising between 1 % and 10 % by weight of (meth)acrylic acid with respect to the total weight of the monomer mixture.

The acrylic block copolymer content may be comprised between 5 % and 40 % by weight with respect to the total weight of component A, preferably between 7 % and 30 % by weight, more preferably between 10 % and 20 % by weight.

### Functionalized core-shell filler

The component A comprises a functionalized core-shell filler.

Core-shell fillers may be generally described as polymeric substances, typically in particulate (particle) form, comprising a core (inner portion) comprising (or consisting essentially of) a core polymer and a shell (outer portion) comprising (or consisting essentially of) a shell polymer. One or more intermediate polymer layers may be included between the core and the shell polymers. By "consisting essentially of", it is intended that the core (or shell) advantageously comprises less than 5 % by weight of compounds other than the core (or shell) polymer with respect to the total weight of the core (or shell), preferably less than 2% by weight, more preferably less than 1% by weight.

Typically, the shell polymer has a glass transition temperature which is higher than the glass transition temperature of the core polymer. The glass transition temperature of the polymers of the core-shell filler may be measured according to standard ISO 11357-2, for example with a heating rate of 20°C/min. Generally, the glass transition temperature of the core polymer is less than 10°C, preferably less than 0°C, more preferably less than -20°C. Generally, the glass transition temperature of the shell polymer is greater than 60°C, preferably greater than 80°C, more preferably greater than 100°C.

Unless otherwise stated, standards mentioned throughout the present application are those in effect on the date the application is filed.

The core polymer may comprise a polymer (homopolymer and/or copolymer) of a conjugated diene comprising 4 to 12, preferably 4 to 8, carbon atoms (such as isoprene and/or butadiene), and/or a polymer (homopolymer and/or copolymer) of an acyclic alkyl (meth)acrylate in which the alkyl chain (linear or branched) comprises 1 to 12, preferably 1 to 8, carbon atoms (such as butyl acrylate).

Advantageously, the core polymer comprises (or consists essentially of) a polymer (homopolymer and/or a copolymer) of a conjugated diene selected from isoprene, butadiene, and mixtures thereof, preferably butadiene. Preferably, the core polymer comprises (or consists essentially of) isoprene homopolymer, butadiene homopolymer, isoprene-butadiene copolymer, butadiene-styrene copolymer and/or isoprene-styrene copolymer, more preferably butadiene homopolymer.

By "consists essentially of", it is intended that the core polymer advantageously comprises less than 5 % by weight of polymer(s) other than the aforementioned polymers with respect to the total weight of the core polymer, preferably less than 2% by weight, more preferably less than 1% by weight.

The core polymer may be crosslinked. The crosslinking agent(s) or monomer(s) may be selected from polyfunctional vinylaromatic compounds such as divinylbenzene and divinyltoluene, polyhydric alcohols such as ethylene glycol di(meth)acrylate and 1,3-butanediol di(meth)acrylate, tri(meth)acrylates, allyl carboxylates such as allyl acrylate and allyl methacrylate, and di- and triallyl compounds such as diallyl phthalate, diallyl sebacate and triallyl triazine.

The shell polymer may comprise a polymer (homopolymer and/or copolymer) of an acyclic alkyl (meth)acrylate in which the alkyl chain (linear or branched) comprises 1 to 12, preferably 1 to 8 carbon atoms, more preferably 1 to 4 carbon atoms, such as methyl methacrylate.

When one or more intermediate polymer layers are present, each intermediate polymer may comprise a polymer (homopolymer and/or copolymer) of an acyclic alkyl (meth)acrylate in which the alkyl chain (linear or branched) comprises 1 to 12, preferably 1 to 8 carbon atoms, more preferably 1 to 4 carbon atoms, such as methyl methacrylate. Each intermediate polymer may be identical or different from the shell polymer.

The core-shell filler is "functionalized" because at least one of the shell polymer and the optional intermediate polymer(s) comprises functional groups different from groups derived from the polymerization of an acyclic alkyl (meth)acrylate (i.e. different from acyclic alkyl esters groups remaining after polymerization of said alkyl (meth)acrylate). Such functional groups may be selected from epoxy groups (e.g. glycidyl group), carboxylic acid groups, carboxamide groups (preferably N,N-dialkylcarboxamide groups), alkoxy groups (e.g. methoxy group, ethoxy group), amine groups (e.g. primary amine group), cycloalkyl ester groups (e.g. C8-C12 cycloalkyl such as isobornyl ester, 3,3,5-trimethylcyclohexyl ester, tert-butylcyclohexyl ester and/or (octahydro-4,7-methano-1H-indenyl)methyl ester, in particular isobornyl ester), and mixtures thereof, preferably from carboxylic acid groups, carboxamide groups, and mixtures thereof, more preferably from carboxamide groups. Preferably, the functional group derives from a functional (meth)acrylate; for example, it can be introduced by grafting the polymer to be functionalized (shell polymer, intermediate polymer(s)) with a functional (meth)acrylate or by introducing a functional (meth)acrylate during polymerization of the polymer to be functionalized. Said functional (meth)acrylate may be selected from glycidyl (meth)acrylate, (meth)acrylic acid, amides of (meth)acrylic acid, 2-methoxyethyl (meth)acrylate, (meth)acrylates comprising a primary amine (such as 2-aminoethyl (meth)acrylate), cycloalkyl (meth)acrylates (e.g. C8-C12 cycloalkyl (meth)acrylates such as isobornyl (meth)acrylate, 3,3,5-trimethylcyclohexyl (meth)acrylate, tert-butylcyclohexyl (meth)acrylate and/or (octahydro-4,7-methano-1H-indenyl)methyl (meth)acrylate), and mixtures thereof, preferably from amides of (meth)acrylic acid, in particular N,N-dialkylamides of (meth)acrylic acid (such as dimethylacrylamide).

According to a first embodiment, the core-shell filler does not comprise an intermediate polymer. According to this embodiment, the shell polymer comprises (or consists essentially of) a copolymer of an acyclic alkyl (meth)acrylate and a functional (meth)acrylate. Advantageously, the acyclic alkyl (meth)acrylate is selected from methyl acrylate, ethyl acrylate, butyl acrylate, methyl methacrylate, ethyl methacrylate, butyl methacrylate, and mixtures thereof, preferably methyl methacrylate. The functional (meth)acrylate may be as described above, preferably selected from amides of (meth)acrylic acid, in particular N,N-dialkylamides of (meth)acrylic acid (such as dimethylacrylamide).

In particular, the shell polymer comprises (or consists essentially of) a copolymer comprising at least 70 % by weight of repeating units derived from methyl methacrylate with respect to the total weight of said copolymer.

By "consists essentially of", it is intended that the shell polymer advantageously comprises less than 5 % by weight of polymer(s) other than the aforementioned copolymer with respect to the total weight of the shell polymer, preferably less than 2% by weight, more preferably less than 1% by weight.

The shell polymer may be crosslinked, preferably is crosslinked. The crosslinking agent(s) or monomer(s) may be selected from polyfunctional vinylaromatic compounds such as divinylbenzene and divinyltoluene, polyhydric alcohols such as ethylene glycol di(meth)acrylate and 1,3-butanediol di(meth)acrylate, tri(meth)acrylates, allyl carboxylates such as allyl acrylate and allyl methacrylate, and di- and triallyl compounds such as diallyl phthalate, diallyl sebacate and triallyl triazine.

According to a second embodiment, which is preferred, the core-shell filler comprises an intermediate polymer. According to this embodiment, at least one of the shell polymer and the intermediate polymer(s) comprises (or consists essentially of) a copolymer of an acyclic alkyl (meth)acrylate and a functional (meth)acrylate. Advantageously, the acyclic alkyl (meth)acrylate is selected from methyl acrylate, ethyl acrylate, butyl acrylate, methyl methacrylate, ethyl methacrylate, butyl methacrylate, and mixtures thereof, preferably methyl methacrylate. The functional (meth)acrylate may be as described above, preferably selected from amides of (meth)acrylic acid, in particular N,N-dialkylamides of (meth)acrylic acid (such as dimethylacrylamide).

In particular, the shell polymer and the intermediate polymer(s) comprise (or consist essentially of) a polymer comprising at least 70 % by weight of repeating units derived from methyl methacrylate with respect to the total weight of said polymer.

By "consist essentially of", it is intended that the shell polymer and the intermediate polymer(s) advantageously comprise less than 5 % by weight of polymer(s) other than the aforementioned polymer with respect to the total weight of said shell / intermediate polymer, preferably less than 2% by weight, more preferably less than 1% by weight.

Each of the shell polymer and intermediate polymer(s) may be crosslinked. Preferably, the intermediate polymer is crosslinked. The crosslinking agent(s) or monomer(s) may be selected from polyfunctional vinylaromatic compounds such as divinylbenzene and divinyltoluene, polyhydric alcohols such as ethylene glycol di(meth)acrylate and 1,3-butanediol di(meth)acrylate, trimethacrylates, allyl carboxylates such as allyl acrylate and allyl methacrylate, and di- and triallyl compounds such as diallyl phthalate, diallyl sebacate and triallyl triazine.

According to a preferred embodiment, the functionalized core-shell filler comprises:
- a core comprising (or consisting essentially of) a core polymer comprising (or consisting essentially of) butadiene homopolymer,
- a shell comprising (or consisting essentially of) a shell polymer comprising (or consisting essentially of) a polymer of methyl methacrylate, in particular comprising at least 70 % by weight of repeating units derived from methyl methacrylate with respect to the total weight of said polymer, and
- optionally one or more intermediate polymer layers, each layer comprising (or consisting essentially of) an intermediate polymer comprising (or consisting essentially of) a polymer of methyl methacrylate, in particular comprising at least 70 % by weight of repeating units derived from methyl methacrylate with respect to the total weight of said polymer,
wherein at least one of the shell polymer and the optional intermediate polymer(s) comprises carboxamide groups, preferably N,N-dialkylcarboxamide groups.

The volume average diameter of the functionalized core-shell filler may be comprised between 10 and 900 nm, preferably between 20 and 700 nm, more preferably between 20 and 500 nm. The volume average diameter may be measured by dynamic light scattering.

The functionalized core-shell filler content may be comprised between 1 % and 30 % by weight with respect to the total weight of component A, preferably between 2 % and 20 % by weight, more preferably between 3 % and 10 % by weight.

### Urethane (meth)acrylate oligomer

Advantageously, the component A further comprises a urethane (meth)acrylate oligomer.

The term "oligomer" is known by the skilled person and may be defined as a small polymer, e.g. comprising 2 to 30 repeating units.

The urethane (meth)acrylate oligomer can be obtained by reaction between a polyol and a polyisocyanate, thus forming one or more urethane (-O-C(=O)-NH-) links, followed by functionalization with a (meth)acrylate.

The polyol may be a polyether polyol and/or a polyester polyol, preferably a polyether polyol such as polyethylene glycol or polypropylene glycol. The polyol is preferably a diol.

The polyisocyanate may be aliphatic or aromatic, preferably aromatic. The polyisocyanate is preferably a diisocyanate.

The (meth)acrylate implemented for functionalization may be an hydroxyalkyl (meth)acrylate, for example hydroxyethyl (meth)acrylate, hydroxypropyl (meth)acrylate, hydroxybutyl (meth)acrylate, hydroxypentyl (meth)acrylate and/or hydroxyhexyl (meth)acrylate, in particular hydroxyethyl (meth)acrylate. Said (meth)acrylate is preferably a methacrylate.

Preferably, the urethane (meth)acrylate oligomer comprises between two and six (meth)acrylate groups, more preferably exactly two (meth)acrylate groups, in particular methacrylate groups.

The urethane (meth)acrylate oligomer may have a number average molecular weight comprised between 500 g/mol and 8000 g/mol, preferably between 700 g/mol and 5000 g/mol. The number average molecular weight may be determined by size exclusion chromatography (SEC), for example using polymethyl (meth)acrylate reference standards and tetrahydrofuran as the solvent.

There are many urethane (meth)acrylate oligomers commercially available, notably from SARTOMER.

The urethane (meth)acrylate oligomer content may be comprised between 5 % and 35 % by weight with respect to the total weight of component A, preferably between 10 % and 30 % by weight, more preferably between 15 % and 25 % by weight.

### Radical initiator

The component B comprises a radical initiator, i.e. an initiator generating radicals. Preferably, the production of radicals results from a redox reaction.

Suitable radical initiators are well known in the art and may be selected from, in particular, peroxides (i.e. compounds comprising an oxygen-oxygen single bond), azo-initiators, and mixtures thereof, preferably from peroxides.

As examples of peroxides, mention may be made of inorganic persulfate compounds (such as ammonium persulfate, potassium persulfate, sodium persulfate), hydrogen peroxide, organic hydroperoxides (such as cumene hydroperoxide, t-butyl hydroperoxide), peroxyesters (such as t-butyl peroxyneodecanoate, t-butyl peroxybenzoate), peroxydicarbonates (such as dicyclohexyl peroxydicarbonate), diacyl peroxides (such as acetyl peroxide, benzoyl peroxide, lauroyl peroxide), dialkyl peroxides (such as dicumyl peroxide), peracids (such as peracetic acid, perbenzoic acid), and mixtures thereof. Preferably, the radical initiator is selected from diacyl peroxides.

As examples of azo-initiators, mention may be made of 2,2'-azobisisobutyronitrile, 4,4'-azobis(4-cyanovaleric acid) , 2,2'-azobis(2-methylbutyronitrile), and mixtures thereof.

When a peroxide is implemented as a radical initiator, the composition according to the invention may further comprise a reducing agent (used to promote the decomposition of the peroxide), introduced in component A. Suitable reducing agents may be selected from tertiary amines, alpha-aminosulfones (such as bis(tolylsulfonymethyl)benzylamine), sulfinic acid salts (such as disodium hydroxysulfinoacetate), ferrous compounds (such as iron(II) sulfate, iron(III) chloride), tartaric acid or a salt thereof, ascorbic acid or a salt thereof, and mixtures thereof.

Preferably, the reducing agent is selected from tertiary amines, more preferably from aromatic tertiary amines. For example, the reducing agent may be selected from tertiary amines derived from p-toluidine (such as N,N-diisopropanol-p-toluidine, N,N-dimethyl-p-toluidine, N,N-dihydroxyethyl-p-toluidine, N-(2-hydroxyethyl)-N-methyl-p-toluidine, 2-{[2-(2-hydroxyethoxy)ethyl](4-methylphenyl)amino}ethanol), tertiary amines derived from aniline (such as N,N-dimethylaniline, N,N-bis(2-hydroxypropyl)-p-aniline, N-(2-hydroxyethyl)-N-methylaniline, N,N-diisopropanol-p-chloroaniline, N,N-diisopropanol-p-bromoaniline, N,N-diisopropanol-p-bromo-m-methylaniline, N,N-dimethyl-p-chloroaniline, N,N-dimethyl-p-bromoaniline, N,N-diethyl-p-chloroaniline, N,N-diethyl-p-bromoaniline), N,N-dimethylaminomethylphenol, and mixtures thereof, preferably from tertiary amines derived from p-toluidine, in particular from N,N-dihydroxyalkyl-p-toluidine.

The radical initiator content may be comprised between 1 % and 40 % by weight with respect to the total weight of component B, preferably between 5 % and 30 % by weight.

When a reducing agent is present, the weight ratio reducing agent / peroxide may be comprised between 0.2 and 5, preferably between 0.5 and 2.

### Additives in component A

The component A may further comprise one or more additives selected from crosslinkers, adhesion promoters, fillers (other than the functionalized core-shell filler), thermal stabilizers, UV stabilizers (or antioxidants), plasticizers, rheological agents, pigments, film-forming agents, solvents, and mixtures thereof.

Advantageously, the component A comprises a mixture of additives selected from crosslinkers, adhesion promoters, fillers, UV stabilizers (or antioxidants), rheological agents and film-forming agents.

The total content of additives may be up to 30 % by weight with respect to the total weight of the component A, preferably between 1 % and 20 % by weight.

The crosslinker may be a multifunctional (meth)acrylate, preferably a multifunctional methacrylate. For example, the crosslinker may be selected from polyethylene glycol di(meth)acrylates (such as diethylene, triethylene and/or tetraethylene glycol di(meth)acrylate), polypropylene glycol di(meth)acrylates (such as dipropylene glycol di(meth)acrylate), hexanediol di(meth)acrylate, trimethylolpropane tri(meth)acrylate, tetramethylene glycol di(meth)acrylate, di(pentamethylene glycol) di(meth)acrylate, ethylene di(meth)acrylate, bisphenol A di(meth)acrylate, bisphenol F di(meth)acrylate, and mixtures thereof, preferably from polyethylene glycol dimethacrylates (such as diethylene, triethylene and/or tetraethylene glycol dimethacrylate), polypropylene glycol dimethacrylates (such as dipropylene glycol dimethacrylate), hexanediol dimethacrylate, trimethylolpropane trimethacrylate, tetramethylene glycol dimethacrylate, di(pentamethylene glycol) dimethacrylate, ethylene dimethacrylate, bisphenol A dimethacrylate, bisphenol F dimethacrylate, and mixtures thereof, in particular trimethylolpropane trimethacrylate.

The crosslinker content may be up to 5 % by weight with respect to the total weight of the component A, preferably between 0.1 % and 3 % by weight.

The adhesion promoter may be selected from silanes (such as aminosilanes, epoxysilanes, acryloyl silanes), adhesion promoters based on a phosphate ester (such as 2-hydroxyethyl (meth)acrylate phosphate mono-, di- and tri-esters), (meth)acrylic acid, metal di(meth)acrylates (such as zinc di(meth)acrylate, calcium di(meth)acrylate, magnesium di(meth)acrylate), and mixtures thereof, preferably from adhesion promoters based on a methacrylate phosphate ester, metal dimethacrylates, and mixtures thereof, in particular a mixture of 2-hydroxyethyl methacrylate phosphate ester(s) and zinc dimethacrylate.

The adhesion promoter content may be up to 5 % by weight with respect to the total weight of the component A, preferably between 0.5 % and 4 % by weight.

The filler may be selected from mineral fillers, organic fillers and mixtures thereof, preferably from mineral fillers.

As examples of mineral fillers, mention may be made of any mineral filler usually used in the field of adhesive compositions. These fillers are typically provided in the form of particles of diverse geometry. For example, they may be spherical, fibrous or have an irregular shape.

The mineral filler may be selected from the group consisting of clays (in particular talc), quartz, carbonated fillers (in particular calcium carbonate, which may be coated with fatty acid (the latter being preferably precipitated)), kaolins, gypsum, hollow mineral microspheres (in particular hollow glass microspheres such as those made of calcium sodium borosilicate or of aluminosilicate), zeolites, and mixtures thereof, preferably from talc, carbonated fillers, and mixtures thereof, in particular talc.

The mineral filler can be untreated or treated, for example using a fatty acid comprising stearic acid.

The average particle size of the mineral filler can range from 10 nm to 400 µm, preferably from 20 nm to 100 µm, more preferably from 30 nm to 50 µm.

In the present description, the average particle size advantageously corresponds to the particle size d50, that is to say the maximum size of 50% of the smallest particles by volume, and can be measured with a particle size analyzer, in particular by laser diffraction on a MALVERN type device (for example according to the ISO 13320 standard).

As examples of organic fillers, mention may be made of any organic filler, particularly polymeric, usually used in the field of adhesive compositions.

The organic filler may be selected from polyvinyl chloride (PVC), polyolefins, rubber, ethylene vinyl acetate (EVA), hollow microspheres of expandable or non-expandable thermoplastic polymer (such as hollow microspheres of vinylidene chloride/ acrylonitrile), aramid fibers (such as Kevlar^{®}), and mixtures thereof.

The average particle size of the organic filler may be less than or equal to 50 µm, preferably between 5 and 20 µm.

The filler content may be up to 10 % by weight with respect to the total weight of the component A, preferably between 1 % and 5 % by weight.

The thermal stabilizer may be selected from hydroquinone, methyl hydroquinone, 2,6-di-tert-butyl-4-methoxyphenol, 2,4-dimethyl-6-tert-butylphenol (Topanol A).

The thermal stabilizer content may be up to 3 % by weight with respect to the total weight of the component A.

The UV stabilizer (or antioxidant) may be selected from benzotriazoles, benzophenones, phosphites (such as tris(2,4-di-tert-butylphenyl)phosphite), hindered phenols (such as ethylenebis(oxyethylene)bis[3-(5-tert-butyl-4-hydroxy-m-tolyl)propionate], 2,2'-methylenebis(6-(tert-butyl)-4-methylphenol), 2,2'-methylenebis(6-(tert-butyl)-4-ethylphenol), 2,2'-methylenebis(4-methyl-6-cyclohexylphenol), 2,2'-methylenebis(4,6-di(tert-butyl)phenol), 4,4'-methylenebis(2,6-di(tert-butyl)phenol, octadecyl 3-(3,5-di-tert-butyl-4-hydroxyphenyl)propionate), 2,6-di (tert-butyl)-4-methylphenol), hindered amines (such as bis(1-octyloxy-2,2,6,6-tetramethyl-4-piperidyl)sebacate, bis(2,2,6,6-tetramethyl-4-piperidyl)sebacate, bis(1,2,2,6,6-pentamethyl-4-piperidyl)sebacate (CAS No: 41556-26-7), methyl 1,2,2,6,6-pentamethyl-4-piperidyl sebacate (CAS No: 82919-37-7), 4,4'-bis(α,α-dimethylbenzyl)diphenylamine), and mixtures thereof, preferably from phosphites, in particular tris(2,4-di-tert-butylphenyl)phosphite.

The UV stabilizer (or antioxidant) content may be up to 3 % by weight with respect to the total weight of the component A, preferably between 0.05 % and 2 % by weight.

The plasticizer may be any plasticizer usually implemented in the field of adhesive compositions.

For example, the plasticizer may be selected from epoxy resins (such as those based on bisphenol A diglycidyl ether), alkylphthalates (such as diisodecyl phthalate, diisononyl phthalate, diisononyl hexahydrophthalate), benzoates (such as nonylbenzoate), esters of alkylsulphonic acid and phenol (e.g. MESAMOLL^{®} by LANXESS), pentaerythritol tetravalerate, diisononyl-1,2-cyclohexane dicarboxylate, 3,3'-methylenebis(oxymethylene)]bis[heptane], dioctyl carbonate, natural oils (optionally epoxidized), polypropylene, polybutylene, hydrogenated polyisoprene, and mixtures thereof.

The plasticizer content may be up to 8 % by weight with respect to the total weight of the component A, preferably up to 5 % by weight.

The rheological agent may be selected from thixotropic agents, for example from:
- PVC plastisols, corresponding in particular to a suspension of PVC in a plasticizer that is miscible with PVC, obtained in situ by heating to temperatures ranging from 60°C to 80°C. These plastisols may be those described in particular in the publication Polyurethane Sealants, Robert M. Evans, ISBN 087762-998-6,
- fumed silica (optionally hydrophobic),
- urea derivatives derived from the reaction of a diisocyanate monomer, preferably an aromatic diisocyanate monomer such as methylene diphenyl diisocyanate (e.g. 4,4'-MDI), with an aliphatic primary amine such as butylamine,
- waxes derived from castor oil, such as THIXCIN^{®} R sold by ELEMENTIS,
- amide waxes, preferably micronized amide waxes, such as Crayvallac^{®} SLT sold by Arkema, and
- mixtures thereof.

By "waxes derived from castor oil", it is intended waxes obtained from castor oil, in particular hydrogenated castor oil.

By "amide waxes", it is intended waxes comprising one or more compounds having at least one amide group. In particular, amide waxes can be obtained from organic acid(s) (for example fatty acid(s)) and (di)amine(s).

Amide waxes are preferably micronized, i.e. they have an average particle size of less than 1 mm. Advantageously, the amide waxes have an average particle size of less than 500 µm, preferably less than 100 µm, more preferably less than 10 µm.

Preferably, the rheological agent is selected from fumed silica, amide waxes, and mixtures thereof, in particular a mixture of hydrophilic fumed silica and amide wax.

The rheological agent content may be up to 15 % by weight with respect to the total weight of the component A, preferably between 3 % and 10 % by weight.

The pigment may be selected from organic pigments, inorganic pigments, and mixtures thereof. For example, the pigment may be selected from phthalocyanine-based pigments (such as copper phthalocyanine, halogenated copper phthalocyanine, metal-free phthalocyanine), anthraquinone-based pigments (such as 1-methylamino-4-o-tolylaminoanthranquinone, 1,4-diisopropyl aminoanthraquinone, 1,4-diaminoanthraquinone, 1,4-dibutyl-aminoanthraquinone, 1-amino-4-anilinoanthraquinone), quinacridone-based pigments, perylene-based pigments, thioindigo-based pigments, quinophthalone-based pigments, titanium dioxide, carbon black, manganese ferrite, and mixtures thereof.

The pigment content may be up to 2 % by weight with respect to the total weight of the component A.

The film-forming agent may be selected from hydrocarbon oils (also called mineral oils, which are generally obtained from petroleum, such as paraffinic oils, naphthenic oils, vaseline oil), waxes (such as paraffins) comprising polar compounds such as polyoxyethylene isodecyl ether, and mixtures thereof, preferably from hydrocarbon oils, in particular vaseline oil.

A film-forming agent may be implemented to limit the reaction of the unsaturated compounds contained in the composition according to the invention with the dioxygen in the air.

The film-forming agent content may be up to 8 % by weight with respect to the total weight of the component A, preferably between 0.1 % and 5 % by weight.

The solvent may be any solvent suitable for acrylic adhesive compositions.

The solvent content may be up to 5 % by weight with respect to the total weight of the component A.

### Additives in component B

The component B may further comprise one or more additives selected from adhesion promoters, fillers (other than the functionalized core-shell filler), thermal stabilizers, UV stabilizers (or antioxidants), plasticizers, rheological agents, pigments, solvents, and mixtures thereof.

Advantageously, the component B comprises a mixture of additives selected from plasticizers and rheological agents.

The total content of additives may be up to 99 % by weight with respect to the total weight of the component B, preferably between 70 % and 95 % by weight.

The adhesion promoter may be selected from aminosilanes, epoxysilanes, and mixtures thereof.

The adhesion promoter content may be up to 15 % by weight with respect to the total weight of the component B.

The filler may be selected from mineral fillers, organic fillers and mixtures thereof, preferably from mineral fillers.

As examples of mineral fillers, mention may be made of any mineral filler usually used in the field of adhesive compositions. These fillers are typically provided in the form of particles of diverse geometry. For example, they may be spherical, fibrous or have an irregular shape.

The mineral filler may be selected from the group consisting of clays (in particular talc), quartz, carbonated fillers (in particular calcium carbonate, which may be coated with fatty acid (the latter being preferably precipitated)), kaolins, gypsum, hollow mineral microspheres (in particular hollow glass microspheres such as those made of calcium sodium borosilicate or of aluminosilicate), zeolites, and mixtures thereof.

The mineral filler can be untreated or treated, for example using a fatty acid comprising stearic acid.

The average particle size of the mineral filler can range from 10 nm to 400 µm, preferably from 20 nm to 100 µm, more preferably from 30 nm to 50 µm.

As examples of organic fillers, mention may be made of any organic filler, particularly polymeric, usually used in the field of adhesive compositions.

The organic filler may be selected from polyvinyl chloride (PVC), saturated polyolefins, ethylene vinyl acetate (EVA), hollow microspheres of expandable or non-expandable thermoplastic polymer (such as hollow microspheres of vinylidene chloride/ acrylonitrile), aramid fibers (such as Kevlar^{®}), and mixtures thereof.

The average particle size of the organic filler may be less than or equal to 50 µm, preferably between 5 and 20 µm.

The filler content may be up to 10 % by weight with respect to the total weight of the component B.

The thermal stabilizer may be selected from hydroquinone, methyl hydroquinone, 2,6-di-tert-butyl-4-methoxyphenol, 2,4-dimethyl-6-tert-butylphenol (Topanol A).

The thermal stabilizer content may be up to 15 % by weight with respect to the total weight of the component B.

The UV stabilizer (or antioxidant) may be selected from benzotriazoles, benzophenones, phosphites (such as tris(2,4-di-tert-butylphenyl)phosphite), hindered phenols (such as those indicated above for component A), hindered amines (such as those indicated above for component A), and mixtures thereof.

The UV stabilizer (or antioxidant) content may be up to 15 % by weight with respect to the total weight of the component B.

The plasticizer may be any plasticizer usually implemented in the field of adhesive compositions.

For example, the plasticizer may be selected from epoxy resins (such as those based on bisphenol A diglycidyl ether), alkylphthalates (such as diisodecyl phthalate, diisononyl phthalate, diisononyl hexahydrophthalate), benzoates (such as nonylbenzoate), esters of alkylsulphonic acid and phenol (e.g. MESAMOLL^{®} by LANXESS), pentaerythritol tetravalerate, diisononyl-1,2-cyclohexane dicarboxylate, 3,3'-methylenebis(oxymethylene)]bis[heptane], dioctyl carbonate, natural oils (optionally epoxidized), polyalkylene glycols (in particular having a polymer backbone based on ethylene glycol and/or propylene glycol monomers, such as polyethylene glycol-ran-propylene glycol) monobutyl ether), polypropylene, polybutylene, hydrogenated polyisoprene, and mixtures thereof, preferably from epoxy resins, benzoates, polyalkylene glycols, and mixtures thereof, in particular from epoxy resins based on bisphenol A diglycidyl ether, alkylbenzoates, polyalkylene glycols, and mixtures thereof.

The epoxy resin may be monomeric or polymeric, preferably monomeric.

The epoxy resin may be selected from:
- polyglycidyl ethers of polyphenolic compounds (preferably bisphenol A), preferably comprising from 2 to 6 glycidyl ether functions per mole of resin,
- derivatives thereof (typically elastomer-modified epoxy resins), and
- mixtures thereof.

Elastomer-modified epoxy resins are typically obtained by reaction between a base epoxy resin with an elastomer comprising terminal functions reactive with the epoxy functions. Preferably, the elastomer-modified epoxy resin is a polyether-modified epoxy resin.

A polyphenolic compound is a compound having at least two aromatic hydroxyl groups.

The polyphenolic compounds may be selected from resorcinol, catechol, hydroquinone, bisphenol A (2,2-bis-(4-hydroxyphenyl)propane), bisphenol AP (1,1-bis-(4 -hydroxyphenyl)-1-phenylethane), bisphenol AF (2,2-bis-(4-hydroxyphenyl)-hexafluoropropane), bisphenol B ((2,2-bis-(4-hydroxyphenyl)butane), bisphenol BP (bis-(4-hydroxyphenyl)-diphenylmethane), bisphenol C (2,2-bis-(3-methyl-4-hydroxyphenyl)propane), bisphenol CII (bis(4-hydroxyphenyl)-2,2-dichloroethylene), bisphenol E ( 1,1-bis-(4-hydroxyphenyl)ethane), bisphenol F (bis(4-hydroxyphenyl)-2,2-dichloroethylene), bisphenol FL (4,4'-(9H-fluoren-9-ylidene)bisphenol, bisphenol G (2,2-bis-(4-hydroxy-3-isopropylphenyl)propane), bisphenol M (1,3-bis-(2-(4-hydroxyphenyl)-2-propyl)benzene), bisphenol P (1,4-bis(2-4-hydroxyphenyl)-2-propyl)benzene), bisphenol PH (5,5'-(1-methylethylidene)-bis[1,1'-(bisphenyl)-2ol]propane), bisphenol S (bis(4-hydroxyphenyl)sulfone), bisphenol TMC (1,1-bis(4-hydroxyphenyl)-3,3,5-trimethylcyclohexane); bisphenol Z (1,1-bis(4-hydroxyphenyl)cyclohexane), bisphenol K, tetraethylbiphenol, and mixtures thereof, preferably bisphenol A.

Many epoxy resins are available commercially, for example: D.E.R.^{™} 331 and D.E.R.^{™} 383 by DOW CHEMICALS, EPON 862 by HEXION SPECIALITY CHEMICALS, EPOSIR^{®} resins based on bisphenol A marketed by SIR INDUSTRIAL (such as EPOSIR^{®} 7120), EPOSIR^{®} resins based on bisphenol A/bisphenol F (such as EPOSIR^{®} F556), POLYCAVIT^{®} 3622 by STRUKTOL, ARALDITE^{®} GY 250 by HUNTSMAN.

The plasticizer content may be up to 90 % by weight with respect to the total weight of the component B, preferably between 20 % and 85 % by weight.

The rheological agent may be selected from thixotropic agents, for example from:
- PVC plastisols, corresponding in particular to a suspension of PVC in a plasticizer that is miscible with PVC, obtained in situ by heating to temperatures ranging from 60°C to 80°C. These plastisols may be those described in particular in the publication Polyurethane Sealants, Robert M. Evans, ISBN 087762-998-6,
- fumed silica (optionally hydrophobic),
- urea derivatives derived from the reaction of a diisocyanate monomer, preferably an aromatic diisocyanate monomer such as methylene diphenyl diisocyanate (e.g. 4,4'-MDI), with an aliphatic primary amine such as butylamine,
- waxes derived from castor oil, such as THIXCIN^{®} R sold by ELEMENTIS,
- amide waxes, preferably micronized amide waxes, such as Crayvallac^{®} SLT sold by Arkema, and
- mixtures thereof.

Amide waxes are preferably micronized, i.e. they have an average particle size of less than 1 mm. Advantageously, the amide waxes have an average particle size of less than 500 µm, preferably less than 100 µm, more preferably less than 10 µm.

Preferably, the rheological agent is fumed silica, in particular hydrophobic fumed silica.

The rheological agent content may be up to 20 % by weight with respect to the total weight of the component B, preferably between 1 % and 10 % by weight.

The pigment may be selected from organic pigments, inorganic pigments, and mixtures thereof. For example, the pigment may be selected from phthalocyanine-based pigments (such as copper phthalocyanine, halogenated copper phthalocyanine, metal-free phthalocyanine), anthraquinone-based pigments (such as 1-methylamino-4-o-tolylaminoanthranquinone, 1,4-diisopropyl aminoanthraquinone, 1,4-diaminoanthraquinone, 1,4-dibutyl-aminoanthraquinone, 1-amino-4-anilinoanthraquinone), quinacridone-based pigments, perylene-based pigments, thioindigo-based pigments, quinophthalone-based pigments, titanium dioxide, carbon black, manganese ferrite, and mixtures thereof.

The pigment content may be up to 5 % by weight with respect to the total weight of the component B.

The solvent may be any solvent suitable for acrylic adhesive compositions, such as water.

The solvent content may be up to 8 % by weight with respect to the total weight of the component B.

### Other features of the composition according to the invention

Advantageously, the volume ratio of component A with respect to component B is comprised between 1 and 20, preferably between 5 and 15, in particular about 10.

One or more of the ingredients comprised in the composition according to the invention may be obtained from recycled materials and/or biobased materials. In particular, the monofunctional (meth)acrylate monomer and/or the acrylic block copolymer may be obtained from recycled materials. By "biobased", it is intended materials that are obtained from biological resources, especially plants, and may have undergone chemical modifications.

According to an embodiment, the composition according to the invention comprises:
- between 20 % and 80 % by weight of a monofunctional (meth)acrylate monomer in the component A with respect to the total weight of component A, the monofunctional (meth)acrylate monomer preferably comprising at least 50 % by weight of methyl methacrylate with respect to the total weight of the monofunctional (meth)acrylate monomer,
- between 5 % and 40 % by weight of an acrylic block copolymer in the component A with respect to the total weight of component A, the acrylic block copolymer preferably only comprising (meth)acrylic blocks,
- between 1 % and 30 % by weight of a functionalized core-shell filler in the component A with respect to the total weight of component A, the functionalized core-shell filler preferably comprising a shell polymer and optionally one or more intermediate polymers, wherein at least one of the shell polymer and the optional intermediate polymer(s) comprises functional groups selected from epoxy groups, carboxylic acid groups, carboxamide groups, alkoxy groups, amine groups, cycloalkyl ester groups, and mixtures thereof,

- between 5 % and 35 % by weight of a urethane (meth)acrylate oligomer in the component A with respect to the total weight of component A,
- between 1 % and 40 % by weight of a radical initiator in the component B with respect to the total weight of component B,
- optionally a reducing agent in the component A when a peroxide is implemented as a radical initiator, the weight ratio reducing agent / peroxide being comprised between 0.2 and 5,
- optionally up to 30 % by weight in the component A of one or more additives selected from crosslinkers, adhesion promoters, fillers, thermal stabilizers, UV stabilizers (or antioxidants), plasticizers, rheological agents, pigments, film-forming agents, and mixtures thereof, with respect to the total weight of the component A,
- optionally up to 99 % by weight in the component B of one or more additives selected from adhesion promoters, fillers, thermal stabilizers, UV stabilizers (or antioxidants), plasticizers, rheological agents, pigments, solvents, and mixtures thereof, with respect to the total weight of the component B,
the volume ratio of component A with respect to component B being comprised between 1 and 20.

Preferably, the composition according to the invention consists essentially of the ingredients mentioned above. By "consists essentially of", it is intended that the composition comprises less than 5 % by weight of ingredients other than the aforementioned ingredients, relative to the total weight of the composition, preferably less than 2% by weight, even more preferably less than 1% by weight.

The ingredients of this embodiment and their particular contents are as described above, including the embodiments and preferred features.

In particular, the composition according to the invention comprises:
- between 40 % and 60 % by weight of a monofunctional (meth)acrylate monomer in the component A with respect to the total weight of component A, the monofunctional (meth)acrylate monomer preferably comprising at least 75 % by weight of methyl methacrylate with respect to the total weight of the monofunctional (meth)acrylate monomer,
- between 7 % and 30 % by weight of an acrylic block copolymer in the component A with respect to the total weight of component A, the acrylic block copolymer preferably comprising only alkyl (meth)acrylate blocks, each block optionally further comprising one or more monomers selected from (meth)acrylic acid, amides of (meth)acrylic acid, amino (meth)acrylates, epoxy (meth)acrylates, hydroxy (meth)acrylates, alkoxy (meth)acrylates, and mixtures thereof,

- between 3 % and 10 % by weight of a functionalized core-shell filler in the component A with respect to the total weight of component A, the functionalized core-shell filler preferably comprising a shell polymer and optionally one or more intermediate polymers, wherein at least one of the shell polymer and the optional intermediate polymer(s) comprises functional groups selected from carboxylic acid groups, carboxamide groups, and mixtures thereof,
- between 15 % and 25 % by weight of a urethane (meth)acrylate oligomer in the component A with respect to the total weight of component A, the urethane (meth)acrylate oligomer preferably comprising between two and six (meth)acrylate groups,
- between 5 % and 30 % by weight of a radical initiator in the component B with respect to the total weight of component B, preferably a peroxide,
- optionally a reducing agent in the component A when a peroxide is implemented as a radical initiator, the weight ratio reducing agent / peroxide being comprised between 0.2 and 5,
- optionally between 1 % and 20 % by weight in the component A of one or more additives selected from crosslinkers, adhesion promoters, fillers, thermal stabilizers, UV stabilizers (or antioxidants), plasticizers, rheological agents, pigments, film-forming agents, and mixtures thereof, with respect to the total weight of the component A,
- optionally between 70 % and 95 % by weight in the component B of one or more additives selected from adhesion promoters, fillers, thermal stabilizers, UV stabilizers (or antioxidants), plasticizers, rheological agents, pigments, solvents, and mixtures thereof, with respect to the total weight of the component B,
the volume ratio of component A with respect to component B being comprised between 5 and 15.

Preferably, the composition according to the invention consists essentially of the ingredients mentioned above.

The ingredients of this embodiment and their particular contents are as described above, including the embodiments and preferred features.

Advantageously, the composition according to the invention has a lap shear strength on metal (such as aluminum alloy, steel, stainless steel) comprised between 10 MPa and 40 MPa, preferably between 15 MPa and 30 MPa. The lap shear strength may be measured according to ISO 4587 (2003), for example as described in Example 1 below.

Advantageously, the composition according to the invention has a Young modulus comprised between 800 MPa and 1200 MPa, preferably between 850 MPa and 1100 MPa. The Young modulus may be measured according to ISO 527-1 (2012), for example as described in Example 1 below.

Advantageously, the composition according to the invention has an elongation at break comprised between 60 % and 100 %, preferably between 65 % and 95 %. The elongation at break may be measured according to ISO 527-1 (2012), for example as described in Example 1 below.

Each of components A and B of the composition according to the invention can be prepared separately by simple mixing of its ingredients. An example of preparation is described in Example 1.

Components A and B can be stored, for example, in a dual cartridge protected from air and humidity. The composition according to the invention can then be obtained by attaching to the dual cartridge, for example, a dynamic mixer.

### Use of the composition according to the invention

The invention also relates to the use of the composition according to the invention as an adhesive, preferably as a structural or semi-structural adhesive, in particular in the transportation, motor vehicle (car, bus or truck), electronics, assembly, wind power, marine or construction field.

The composition according to the invention is as described above, including the embodiments and preferred features.

### Method for bonding substrates

The invention also relates to a method for bonding substrates comprising the steps of:
- coating, on at least one surface of the substrates, of the composition according to the invention as described above (including the embodiments and preferred features), then
- contacting the substrates, then
- crosslinking the composition.

It is understood that, during the coating step and the contacting step, the composition according to the invention is in an uncured state.

The crosslinking step can be carried out at a temperature between 10°C and 40°C, preferably between 15°C and 30°C, in particular at ambient temperature (e.g. between 18°C and 25°C).

The substrates may be identical or different.

The substrates to be implemented are vary varied, and are advantageously made of plastic, metal and/or composite materials, preferably metals.

The plastic material may be polycarbonate, poly(methyl methacrylate), poly(vinyl chloride), polystyrene, acrylonitrile butadiene styrene (ABS).

The metal material may be pure or an alloy, for example aluminum or steel (including stainless steel).

The composite material may be a reinforced plastic material, such as fiber-reinforced plastic, in particular sheet moulding composite (SMC). The fibers in the fiber-reinforced plastic may be glass, carbon, aramid or basalt fibers, preferably glass fibers. The fiber length may vary between 6 mm and 50 mm. The polymer in the reinforced plastic material may be polyester, polyolefin, epoxy or vinyl ester resin, preferably polyester or polyolefin (such as polyethylene or polypropylene). The polymer in the reinforced plastic material is preferably unsaturated. The reinforced plastic material may comprise other compounds than the fibers and the polymer (such as filler and/or catalyst).

### Article

The invention also relates to an article comprising the (cured or uncured) composition according to the invention as described above (including the embodiments and preferred features), said composition bonding at least two substrates of said article.

The article may be obtained thanks to the method for bonding substrates according to the invention.

The substrates are preferably as described above for the method for bonding substrates according to the invention (including the embodiments and preferred features), in particular the substrates are made of plastic, metal and/or composite materials, preferably metals.

For example, the article may be a wind turbine blade, battery, glass door, electrical cabinet or traffic sign.

All the embodiments described above can be combined with each other. In particular, the various aforementioned ingredients in the composition, and in particular the preferred embodiments, can be combined with each other.

The following examples illustrate the invention without limiting it.

### EXAMPLES

### Example 1: Materials and methods

### Materials

The following materials were implemented:
- MMA: methyl methacrylate,
- NANOSTRENGTH^{®} M65A ST (by Arkema): polymethylmethacrylate-polybutylacrylate-polymethylmethacrylate block copolymer, acrylic block copolymer,
- CRAYVALLAC^{®} SLT (by Arkema): micronised amide wax, rheology modifier,
- SR350 (by Sartomer): trimethylolpropane trimethacrylate, crosslinker,
- Core-shell A: N,N-dimethylacrylamide functionalized polybutadiene-polymethylmethacrylate core-shell particles, functionalized core-shell filler,
- Core-shell B: non-functionalized polybutadiene-polymethylmethacrylate core-shell particles, non-functionalized core-shell filler,
- PRO22641 (by Sartomer): urethane dimethacrylate oligomer,
- Vaseline oil (by COMEXIM): hydrocarbon oil,
- Talkron^{®} CL 40 (by Mineralia): talc, filler,
- Co-initiator: N,N-dihydroxyethyl-p-toluidine, reducing agent,
- DYMALINK^{®} 708 (by Cray Valley of Total Company): zinc dimethacrylate, adhesion promoter,
- IRGAFOS^{®} 168 (by BASF): tris(2,4-di-tert-butylphenyl)phosphite, antioxidant,
- JPA-514 (by Kowa): 2-hydroxyethylmethacrylate phosphate esters (CAS: 52628-03-2), adhesion promoter,
- HDK^{®} N20 (by WACKER): fumed silica, rheological agent,
- ARALDITE^{®} GY 250 CH (by HUNTSMAN): bisphenol A diglycidyl ether epoxy resin, plasticizer,
- POLYCAVIT^{®} 3622 (by STRUKTOL): polyether modified epoxy resin based on bisphenol A diglycidyl ether, plasticizer,
- AEROSIL^{®} R 208 (by Evonik): hydrophobic fumed silica, rheological agent,
- PEROXAN BP-Paste 50 PF 1 (by PERGAN): comprises dibenzoylperoxide, radical initiator.

### Preparation of core-shell A

Core-shell A was prepared as described below for core-shell B, except that during the second stage B, 2.26 parts of the MMA were substituted by N,N-dimethylacrylamide (DMA).

### Preparation of core-shell B

Stage A - polymerization of a polymer A1: To a 20 L high-pressure reactor was charged: de-ionized water 116.5 parts, emulsifier potassium salt of beef tallow fatty acid 0.1 part, 1,3-butadiene (BD) 21.9 parts, t-dodecyl mercaptan 0.1 parts, and p-menthane hydroperoxide 0.1 parts as an initial kettle charge. The solution was heated, with agitation, to 43°C at which time a redox-based catalyst solution was charged (water 4.5 parts, sodium tetrapyrophosphate 0.3 parts, ferrous sulphate 0.004 parts and dextrose 0.3 parts), effectively initiating the polymerization. Then the solution was further heated to 56°C and held at this temperature for a period of three hours. Three hours after polymerization initiation, a second monomer charge (77.8 parts BD, t-dodecyl mercaptan 0.2 parts), one-half of an additional emulsifier and reductant charge (de-ionized water 30.4 parts, emulsifier potassium salt of beef tallow fatty acid 2.8 parts, dextrose 0.5 parts) and additional initiator (p-menthane hydroperoxide 0.8 parts) were continuously added over eight hours. Following the completion of the second monomer addition, the remaining emulsifier and reductant charge plus initiator was continuously added over an additional five hours. Thirteen hours after polymerization initiation, the solution was heated to 68°C and allowed to react until at least twenty hours had elapsed since polymerization initiation, producing polybutadiene rubber latex R1. The resultant polybutadiene rubber latex (A1) contained 38% solids and had a weight average particle size of about 160 nm.

Stage B - Polymerization of polymer B1: into a 3.9 L reactor was charged 75.0 parts, on a solids basis, of polybutadiene rubber latex R1, 37.6 parts de-ionized water, and 0.1 parts sodium formaldehyde sulfoxylate. The solution was agitated, purged with nitrogen, and heated to 77°C. When the solution reached 77°C, a mixture of 22.6 parts methyl methacrylate (MMA), 1.4 parts 1,4-butanediol dimethacrylate (BDMA) and 0.1 parts t-butyl hydroperoxide initiator was continuously added over 70 minutes, followed by a hold period of 80 minutes. Thirty minutes after the onset of the hold period, 0.1 parts of sodium formaldehyde sulfoxylate and 0.1 parts t-butyl hydroperoxide were added to the reactor at once. Following the 80-minute hold period, a stabilization emulsion was added to the graft copolymer latex. The stabilization emulsion was prepared by mixing 3.2 parts de-ionized water (based on graft copolymer mass), 0.1 parts oleic acid, 0.1 parts potassium hydroxide, and 0.9 parts octadecyl-3-(3,5-di-tertbutyl-4-hydroxyphenyl)propionate. The resultant core shell polymer (A1+B1) had a weight average particle size of about 180 nm.

Stage C - Polymerization of polymer C1 (semi continuous process): charged into a reactor, with stirring, were 10 000g of core shell polymer (A+B) in de-ionized water, 0.01 g of FeSO₄ and 0.032g of ethylenediaminetetraacetic acid, sodium salt (dissolved in 10g of de-ionized water), 3.15g of sodium formaldehydesulfoxylate dissolved in 110g of de-ionized water and 21.33 g of emulsifier potassium salt of beef tallow fatty acid (dissolved in 139.44g of water), and the mixture was stirred until complete dissolution of added raw materials except core-shell polymer. Three vacuum-nitrogen purges were carried out in succession and the reactor left under a slight vacuum. The reactor was then heated. At the same time, a mixture comprising 1066.7 g of methyl methacrylate and 10.67 g of n-octyl mercaptan was nitrogen-degassed for 30 minutes. The reactor was heated at 63°C and maintained at that temperature. Next, the monomer mixture was introduced into the reactor in 180min using a pump. In parallel, a solution of 5.33g of tert-butyl hydroperoxide (dissolved in 100g of de-ionized water) was introduced (same addition time). The lines were rinsed with 50g and 20g of water. Then the reaction mixture was heated at a temperature of 80°C and the polymerization was then left to completion for 60 minutes after the end of the monomers addition. The reactor was cooled down to 30°C.

Core-shell B was then recovered (A1+B1+C1) in the form of a powder by spray drying.

### Preparation of components A and B

Components A and B were prepared separately by mixing the ingredients indicated in Table 1 below at about 23°C in a reactor maintained under constant stirring until homogenization at atmospheric pressure.

By "about X", it is intended more or less 10% the value of X.

### Young modulus and elongation at break

The Young modulus and elongation at break were measured according to ISO 527-1 (2012), using type A test specimens (150 mm long, 4 mm thick, 10 mm width).

The principle of the measurement consists in stretching a standard test specimen in a tensile testing machine at 23°C, the movable jaw of which is moved at a constant speed equal to 10 mm/min. Each standard test specimen was made by applying the composition to be tested in a Teflon mold, and letting it to crosslink for 24 hours under standard conditions (23°C and 60% relative humidity).

The Young modulus is the slope of the tangent at the origin of the curve carrying the tensile stress as a function of the elongation of the specimen, and the elongation at break is the elongation of the specimen corresponding to the stretching observed when the specimen breaks.

### Lap shear strength (LSS)

The lap shear strength was measured according to ISO 4587 (2003). A thickness of 250 µm of the composition to be tested was applied at about 23°C between two plates of different substrates: 6060 aluminum alloy (Alu 6060), stainless steel or steel. The lap shear strength was measured 24 hours later at 23°C.

### Example 2: Comparison of comparative compositions with composition according to the invention

Compositions 1-3 were obtained by introducing respectively a component 1A-3A and a component B into a dual cartridge (protected from air and humidity), then mixing them using a dynamic mixer fixed at the tip of the dual cartridge, at ambient temperature (23°C) with a volume ratio A/B equal to 10. The component A implemented for each composition is described in Table 1 below (values for each component A being weight percentages with respect to the total weight of the component). The component B is the same for compositions 1-3 and is described as follows:
- 37.5 % ARALDITE^{®} GY 250 CH,
- 29.5 % POLYCAVIT^{®} 3622,
- 3.5 % AEROSIL^{®} R 208, and
- 29.5 % PEROXAN BP-Paste 50 PF 1,
the percentages being percentages by weight with respect to the total weight of component B.

**Table 1**

| **Component** | **1A (comp.)** | **2A (comp.)** | **3A (invention)** |
|---|---|---|---|
| MMA | 49.6 | 49.6 | 49.7 |
| NANOSTRENGTH^{®} M65A ST | 12.6 | 12.6 | 12.6 |
| CRAYVALLAC^{®} SLT | 1.3 | 1.3 | 1.3 |
| SR350 | 1.0 | 1.0 | 1.0 |
| Core-shell A | - | - | 5.2 |
| Core-shell B | - | 5.2 | - |
| PRO22641 | 23.8 | 18.6 | 18.6 |
| Vaseline oil | 0.4 | 0.4 | 0.4 |
| Talkron^{®} CL 40 | 1.7 | 1.7 | 1.7 |
| Co-initiator | 1.2 | 1.2 | 1.0 |
| DYMALINK^{®} 708 | 0.8 | 0.8 | 0.8 |
| IRGAFOS^{®} 168 | 0.1 | 0.1 | 0.1 |
| JPA-514 | 2.5 | 2.5 | 2.5 |
| HDK^{®} N20 | 4.9 | 4.9 | 4.9 |

The properties of the compositions 1-3 were then evaluated as described in Example 1 and the results are indicated in Table 2.

**Table 2**

| **Composition** | **1 (comp.)** | **2 (comp.)** | **3 (invention)** |
|---|---|---|---|
| LSS Alu 6060 (MPa) | 19 | 20 | 20 |
| LSS Stainless steel (MPa) | 18 | 22 | 22 |
| LSS Steel (MPa) | 18 | 21 | 20 |
| Young modulus (MPa) | 711 | 1075 | 900 |
| Elongation at break (%) | 88 | 30 | 70 |

Comparative composition 1 is a structural radical-curing acrylic adhesive having a high lap shear strength on different metal substrates. It is desirable to increase its Young modulus in order to improve its resistance to mechanical stress, while not sacrificing its elongation at break, these properties being considered as opposed properties.

Comparative composition 2 corresponds to comparative composition 1 wherein core-shell B (non-functionalized) was added. The lap shear strength of comparative composition 2 is similar to that of comparative composition 1. Furthermore, the presence of core-shell B results in a significant increase in Young modulus, but also a drastic decrease in elongation at break.

Composition 3 according to the invention corresponds to comparative composition 1 wherein core-shell A (functionalized) was added. The lap shear strength of composition 3 is similar to that of comparative composition 1. Furthermore, the presence of core-shell A results in a significant increase in Young modulus, while keeping a high elongation at break.

Therefore, adding a functionalized core-shell filler surprisingly makes it possible to obtain a structural adhesive having an increased Young modulus and a high elongation at break.

## Claims

1. A two-component composition comprising:
- a component A comprising:
∘ a monofunctional (meth)acrylate monomer,
∘ an acrylic block copolymer, and
∘ a functionalized core-shell filler, and
- a component B comprising:
∘ a radical initiator.

2. The two-component composition according to claim 1, wherein the monofunctional (meth)acrylate monomer has the formula (I): CH₂=C(R^{a})-COOR^{b}, wherein:
- R^{a} represents a hydrogen atom or a methyl group, preferably a methyl group,
- R^{b} represents an aliphatic or aromatic hydrocarbon group optionally comprising one or more groups selected from ether, ester, hydroxyl, carbonyl, and mixtures thereof, preferably R^{b} represents an aliphatic or aromatic hydrocarbon group, more preferably an alkyl group.

3. The two-component composition according to claim 1 or 2, wherein the monofunctional (meth)acrylate monomer is selected from methyl methacrylate, isobornyl acrylate, isobornyl methacrylate, glycerol formal methacrylate, 3,3,5-trimethylcyclohexyl (meth)acrylate, tert-butylcyclohexyl (meth)acrylate, (octahydro-4,7-methano-1H-indenyl)methyl (meth)acrylate, and mixtures thereof, in particular methyl methacrylate.

4. The two-component composition according to any one of claims 1 to 3, wherein the monofunctional (meth)acrylate monomer comprises at least 50 % by weight of methyl methacrylate with respect to the total weight of the monofunctional (meth)acrylate monomer, preferably at least 75 % by weight of methyl methacrylate, more preferably at least 90 % by weight of methyl methacrylate.

5. The two-component composition according to any one of claims 1 to 4, wherein the acrylic block copolymer only comprises (meth)acrylic blocks.

6. The two-component composition according to any one of claims 1 to 5, wherein the acrylic block copolymer comprises at least one block A and at least one block B, the block A being a polymer comprising methyl methacrylate monomer, and the block B being a polymer not comprising methyl methacrylate monomer.

7. The two-component composition according to any one of claims 1 to 6, wherein the functionalized core-shell filler comprises a core comprising a core polymer, a shell comprising a shell polymer and optionally one or more intermediate polymers between the core and the shell polymer, wherein at least one of the shell polymer and the optional intermediate polymer(s) comprises functional groups selected from epoxy groups, carboxylic acid groups, carboxamide groups, alkoxy groups, amine groups, cycloalkyl ester groups, and mixtures thereof, preferably from carboxylic acid groups, carboxamide groups, and mixtures thereof, more preferably from carboxamide groups.

8. The two-component composition according to any one of claims 1 to 7, wherein the component A further comprises a urethane (meth)acrylate oligomer.

9. The two-component composition according to any one of claims 1 to 8, wherein the radical initiator is selected from peroxides, azo-initiators, and mixtures thereof, preferably from peroxides.

10. The two-component composition according to any one of claims 1 to 9, wherein the component A further comprises one or more additives selected from crosslinkers, adhesion promoters, fillers, thermal stabilizers, UV stabilizers, plasticizers, rheological agents, pigments, film-forming agents, solvents, and mixtures thereof.

11. The two-component composition according to any one of claims 1 to 10, wherein the component B may further comprise one or more additives selected from adhesion promoters, fillers (other than the functionalized core-shell filler), thermal stabilizers, UV stabilizers, plasticizers, rheological agents, pigments, solvents, and mixtures thereof.

12. The two-component composition according to any one of claims 1 to 11, comprising:
- between 20 % and 80 % by weight of a monofunctional (meth)acrylate monomer in the component A with respect to the total weight of component A,
- between 5 % and 40 % by weight of an acrylic block copolymer in the component A with respect to the total weight of component A,
- between 1 % and 30 % by weight of a functionalized core-shell filler in the component A with respect to the total weight of component A,
- between 5 % and 35 % by weight of a urethane (meth)acrylate oligomer in the component A with respect to the total weight of component A,
- between 1 % and 40 % by weight of a radical initiator in the component B with respect to the total weight of component B,
- optionally a reducing agent in the component A when a peroxide is implemented as a radical initiator, the weight ratio reducing agent / peroxide being comprised between 0.2 and 5,
- optionally up to 30 % by weight in the component A of one or more additives selected from crosslinkers, adhesion promoters, fillers, thermal stabilizers, UV stabilizers, plasticizers, rheological agents, pigments, film-forming agents, and mixtures thereof, with respect to the total weight of the component A,
- optionally up to 99 % by weight in the component B of one or more additives selected from adhesion promoters, fillers, thermal stabilizers, UV stabilizers, plasticizers, rheological agents, pigments, solvents, and mixtures thereof, with respect to the total weight of the component B,
the volume ratio of component A with respect to component B being comprised between 1 and 20.

13. Use of the two-component composition according to any one of claims 1 to 12, as an adhesive.

14. Method for bonding substrates comprising the steps of:
- coating, on at least one surface of the substrates, of the two-component composition according to any one of claims 1 to 12, then
- contacting the substrates, then
- crosslinking the composition.

15. Article comprising the two-component composition according to any one of claims 1 to 12, said composition bonding at least two substrates of said article.
